Europäisches Patentamt

European Patent Office

Office européen des brevets

(19)

(11) Veröffentlichungsnummer : **0 153 486**
**B1**

(12) **EUROPÄISCHE PATENTSCHRIFT**

(45) Veröffentlichungstag der Patentschrift :
27.07.88

(21) Anmeldenummer : 84116073.2

(22) Anmeldetag : 21.12.84

(51) Int. Cl.⁴ : **C 08 L 77/12, C 08 K 5/29**

(54) Verfahren zur Herstellung von Formmassen auf Basis von hochmolekularen Poly(etheresteramiden).

(30) Priorität : 25.02.84 DE 3406951

(43) Veröffentlichungstag der Anmeldung :
04.09.85 Patentblatt 85/36

(45) Bekanntmachung des Hinweises auf die Patenterteilung : 27.07.88 Patentblatt 88/30

(84) Benannte Vertragsstaaten :
AT BE CH DE FR GB IT LI NL SE

(56) Entgegenhaltungen :
DE-A- 2 232 972
US-A- 3 752 791

(73) Patentinhaber : HÜLS AKTIENGESELLSCHAFT
- RSP Patente / PB 15 - Postfach 13 20
D-4370 Marl 1 (DE)

(72) Erfinder : Dröscher, Michael, Dr.
Hetkerbruch 34
D-4270 Dorsten 11 (DE)
Erfinder : Mumcu, Salih, Dr.
Leverkusener Strasse 12
D-4370 Marl (DE)
Erfinder : Burzin, Klaus, Dr.
Weilerfeldweg 164
D-4370 Marl (DE)
Erfinder : Gerth, Christian, Dr.
Thiebrei 80
D-4358 Haltern (DE)
Erfinder : Heuer, Horst
An der Landwehr 76
D-4358 Haltern (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Herstellung von Formmassen auf Basis von hochmolekularen Poly(etheresteramiden) mit einer relativen Lösungsviskosität $\eta_{rel}$ von mindestens 2,0.

Poly(etheresteramide) mit relativen Lösungsviskositäten < 1,95 können in einfacher Weise hergestellt und verarbeitet werden. Für eine Reihe von Verarbeitungsverfahren sind jedoch Poly(etheresteramide) mit höheren relativen Lösungsviskositäten erforderlich. Derartige Produkte erfordern einen deutlich erhöhten Herstellungsaufwand.

Es ist bekannt, höhermolekulare Poly(etheresteramide) durch Festphasennachkondensation aus Produkten mit geringerem Molekulargewicht herzustellen. Allerdings ist ein zeit- und energieaufwendiges Verfahren notwendig.

Es ist außerdem bekannt, höhermolekulare Poly(etheresteramide) in einem kontinuierlichen Verfahren in Dünnschichtverdampfern herzustellen (DE-A-28 56 787). Dies ist allerdings ein technik- und energieaufwendiges Verfahren. Die Verarbeitbarkeit daraus hergestellter Formmassen wird nicht verbessert.

Aufgabe der Erfindung war es, ein Verfahren zur Herstellung von Formmassen auf Basis von Poly(etheresteramiden) aufzufinden, die bei hohem Molekulargewicht ($\eta_{rel}$ > 2,0) gleichzeitig gute Verarbeitungseigenschaften aufweisen.

Die Aufgabe wurde durch ein Verfahren gelöst, bei dem man eine Mischung aus

A. Poly(etheresteramiden) mit einer relativen Lösungsviskosität $\eta_{rel}$ von mindestens 1,5 und

B. 0,05 bis 1,5 Gew.-Teilen — bezogen auf 100 Gew.-Teile des Formmasse — eines cyclischen, trimerisierten Isophorondiisocyanats oder eines Oligomeren davon mit einem Oligomerisierungsgrad von 2 bis 5 mit einer Isocyanatfunktionalität von 3 bis 7

herstellt und diese Mischung aus den Komponenten A. und B. bei 180 °C bis 250 °C in der Schmelze thermisch behandelt.

Das cyclische, trimerisierte Isophorondiisocyanat sowie seine Oligomeren mit einem Oligomerisierungsgrad von 2 bis 5 und auch die Herstellung davon sind aus DE-B-23 25 826 bekannt. Bevorzugt eingesetzt wird das cyclische, trimerisierte Isophorondiisocyanat. Grundsätzlich können auch Gemische der genannten Verbindungen als Komponente B. eingesetzt werden.

Die Produkte werden in Mengen von 0,05 bis 1,5 Gew.-Teilen, vorzugsweise von 0,1 bis 1,3 Gew.-Teilen, bezogen auf 100 Gew.-Teile der Formmasse, eingesetzt.

Die Poly(etheresteramide) (Komponente A.) werden durch Kondensieren von

1. einer oder mehrerer polyamidbildender Verbindungen aus der Gruppe der ω-Aminocarbonsäuren bzw. Lactame mit mindestens 6 C-Atomen,
2. einem Poly(alkylenglykol) mit einem Molekulargewicht im Bereich von 160 bis 3 000,
3. einer oder mehrerer weiterer aliphatischer, cycloaliphatischer oder aromatischer Dicarbonsäuren

erhalten.

Als polyamidbildende Verbindung (A.1) werden ω-Aminocarbonsäuren bzw. Lactame mit mindestens 6 C-Atomen, vorzugsweise Laurinlactam, ω-Aminododecansäure oder ω-Aminoundecansäure, verwendet. Eine weitere bevorzugte Möglichkeit besteht darin, anstelle der monomolekularen Aminocarbonsäuren, deren Polymere mit einem mittleren Molekulargewicht von 500 bis 20 000, vorzugsweise von 4 000 bis 10 000, einzusetzen.

Die angegebenen Werte für die mittleren Molekulargewichte ergeben sich durch Bestimmung der Viskositätszahl.

Poly(alkylenglykole) der Komponente A.2 sind Poly(ethylenglykol), Poly(propylenglykol) oder Poly(tetrahydrofuran)diol mit jeweils einem mittleren Molekulargewicht im Bereich von 160 bis 3 000, vorzugsweise 300 bis 2 200, insbesondere von 500 bis 1 200. Bevorzugt ist die Verwendung von Poly(tetrahydrofuran)diol mit einem mittleren Molekulargewicht ($\overline{M}_n$; bestimmt durch Endgruppentitration) von 500 bis 2 000.

Die Komponente A.3 wird durch aliphatische, cycloaliphatische oder aromatische Dicarbonsäuren mit 4 bis 11 C-Atomen im Kohlenstoffgerüst gebildet. Beispielsweise seien Adipinsäure, Pimelinsäure, Korksäure, Azelainsäure, Sebazinsäure, Docecandisäure, Hexahydroterephthalsäure oder die Phthalsäuren genannt. Bevorzugt für diese Komponente werden Terephthalsäure und Dodecandisäure eingesetzt.

Die Poly(etheresteramide) sind in der Weise aufgebaut, daß sich das Gewichtsverhältnis der Komponente A.1 und (A.2 + A.3) im Bereich von 20 : 80 bis zu 50 : 50 bewegt. Bevorzugt ist ein Gewichtsverhältnis im Bereich von 25 bis 45 : 75 bis 55. Die Hydroxyl- und Carboxylgruppen von (A.2 + A.3) liegen in etwa äquivalenten Anteilen, d. h. in einem Verhältnis von 1 : 0,95 bis 1 : 1,05, vor.

Bevorzugte Poly(etheresteramide) werden durch Umsetzung von Laurinlactam, Poly(tetrahydrofuran)diol mit dem mittleren Molgewicht von 500 bis 2 000 und Dodecandisäure oder Terephthalsäure hergestellt. Das mittlere Molekulargewicht dieser Produkte liegt im Bereich von 5 000 bis 20 000, vorzugsweise 8 000 bis 15 000.

Die Herstellung derartiger Poly(etheresteramide) ist beispielsweise aus DE-A-27 12 987, DE-A-29 30 343, DE-A-29 32 234, DE-A-29 36 976 und DE-A-29 36 977 zu entnehmen.

Es können auch Gemische von Poly(etheresteramiden) eingesetzt werden, wobei die Mischungsverhältnisse für die Erfindung unkritisch sind.

Für die Herstellung der Formmassen geeignete Poly(etheresteramide) weisen eine relative Lösungsviskosität $\eta_{rel}$ von mindestens 1,5 auf.

Zur Durchführung des erfindungemäßen Verfahrens wird bei Raumtemperatur eine Mischung aus Poly(etheresteramid) und Verbindungen gemäß Komponente B. hergestellt. Für die thermische Behandlung in der Schmelze wird üblicherweise ein (dis)kontinuierlich betriebener Kneter eingesetzt. Im allgemeinen beträgt die Behandlungszeit bei kontinuierlicher Arbeitsweise 1 bis 5 min und bei diskontinuierlicher Arbeitsweise 2 bis 20 min, wobei die Temperatur 180 °C bis 250 °C, bevorzugt 190 °C bis 240 °C, beträgt.

In die Formmassen können andere Polymere, wie z. B. Polyamide (DE-A-27 16'004) und Poly(alkylenterephthalate) (DE-A-29 30 343), eingearbeitet werden. Diese angeführtem Mischungsbestandteile sind in den so erhaltenen Mischungen zu 1 bis 40, vorzugsweise 5 bis 25 Gew.-Teilen, enthalten.

Übliche Zusatz- und Hilfsstoffe, wie Pigmente, Verarbeitungsmittel, Füll- und Verstärkungsstoffe, Hydrolyse-, Thermo- oder UV-Stabilisatoren, können sowohl während der Herstellung als auch in die fertigen, behandelten Formmassen eingearbeitet werden.

Gegenüber entsprechenden Produkten des Standes der Technik weisen die nach dem erfindungsgemäßen Verfahren erhaltenen Formmassen eine Reihe von Vorteilen auf : Sie sind bei der Herstellung einfacher zu handhaben und zeigen keine Neigung zur Vernetzung.

Die Viskositätzahl J wurde nach DIN 53 727 in m-Kresol bei 25 °C bestimmt (Konzentration : 0,5 g/dl). Daraus lässt sich die relative Lösungsviskosität $\eta_{rel}$ ermitteln.

Mit Buchstaben gekennzeichnete Versuche sind nicht erfindungsgemäß.

## Beispiele

### Beispiel 1

50 g Poly(etheresteramid) ($\eta_{rel}$ = 1,81) erhalten aus 25 Gew.-Teilen Laurinlactam und 75 Gew.-Teilen Terephthalsäure sowie — bezogen auf die Terephthalsäure — äquivalente Mengen an Poly(oxytetramethylen)glykol (Molgewicht ($\overline{M}_n$) : 1 000) werden mit der in der Tabelle angegebenen Menge Isophorondiisocyanat-Oligomeren (Isocyanatfunktionalität : 3,2) für 15 min in einem Laborkneter unter Stickstoffatmosphäre bei 240 °C gemischt. Der jeweilige Anstieg der relativen Lösungsviskosität kann der Tabelle 1 entnommen werden.

Tabelle 1

| Versuch | Isophorondiisocyanat $\underline{/g\underline{/}}$ | $\eta_{rel}$ |
|---------|--------------------------|--------------|
| 1 | 0,125 | 2,01 |
| 2 | 0,25 | 2,05 |
| 3 | 0,375 | 2,16 |
| 4 | 0,50 | 2,25 |
| A | 1,0 | vergelt |

Die Produkte sind blasenfrei.

### Beispiel 2

9 900 g granuliertes Poly(etheresteramid) erhalten aus Laurinlactam, Dodecandisäure sowie — bezogen auf die Dodecandisäure — äquivalente Mengen an Poly(oxytetramethylen)glykol (Molgewicht ($\overline{M}_n$) : 1 000) und 100 g Isophorondiisocyanat-Oligomeres (Isocyanatfunktionalität : 3,2) werden bei 22 °C in einem Taumeltrockner gemischt. Anschließend wird in einem Zweischneckenextruder bei der angegebenen Temperatur und Verweilzeit extrudiert. Die jeweiligen Angaben können Tabelle 2 entnommen werden.

Tabelle 2

| Versuch | Laurinlactam/ Dodecandisäure /Gew.-Tle/ | Viskosität des Poly(etheresteramids) ($\eta_{rel}$) | Verweil- zeit [min] | Temperatur [°C] | Viskosität der Formmasse ($\eta_{rel}$) |
|---|---|---|---|---|---|
| 5 | 25/75 | 1,81 | 2 | 196 | 2,07 |
| 6 | 25/75 | 1,81 | 2 | 218 | 2,06 |
| 7 | 25/75 | 1,81 | 4 | 218 | 2,27 |
| B | 25/75 | 1,81 | 2 | 255 | 1,91 |
| 8 | 40/60 | 1,87 | 2 | 200 | 2,05 |
| 9 | 61/39 | 1,86 | 2 | 220 | 2,11 |
| 10 | 61/39 | 1,86 | 4 | 220 | 2,17 |

Die erhaltenen Formmassen sind blasenfrei.

**Patentansprüche**

1. Verfahren zur Herstellung von Formmassen auf Basis von hochmolekularen Poly(etheresteramiden) mit einer relativen Lösungsviskosität $\eta_{rel}$ von mindestens 2,0, dadurch gekennzeichnet, daß man eine Mischung aus

A. Poly(etheresteramiden) mit einer relativen Lösungsviskosität $\eta_{rel}$ von mindestens 1,5 und

B. 0,05 bis 1,5 Gew.-Teilen — bezogen auf 100 Gew.-Teile der Formmasse — eines cyclischen, trimerisierten Isophorondiisocyanats oder eines Oligomeren davon mit einem Oligomerisierungsgrad von 2 bis 5 mit einer Isocanatfunktionalität von 3 bis 7 herstellt und diese in der Schmelze bei 180 °C bis 250 °C thermisch behandelt.

2. Verfahren gemäß Anspruch 1 und 2, dadurch gekennzeichnet, daß die Mischung neben der Komponente A. 0,1 bis 1,3 Gew.-Teile der Komponente B. — bezogen auf 100 Gew.-Teile der Formmasse enthält.

3. Verfahren gemäß den Ansprüchen 1 bis 3, dadurch gekennzeichnet, daß die Mischung aus den Komponenten A. und B. bei 190 °C bis 240 °C in der Schmelze thermisch behandelt wird.

**Claims**

1. A process for the preparation of a moulding material based on high molecular weight poly(etheresteramide) having a relative solution viscosity $\eta_{rel}$ of at least 2.0, characterized in that a blend of

A. poly(etheresteramide) having a relative solution viscosity $\eta_{rel}$ of at least 1.5 and

B. 0.05 to 1.5 parts by weight — based on 100 parts by weight of the moulding material — of a cyclic, trimerized isophorone diisocyanate or of an oligomer thereof having a degree of oligomerization of 2 to 5 and an isocyanate functionality of 3 to 7 is prepared, and this blend is subjected to a thermal treatment in the melt at 180 °C to 250 °C.

2. A process according to claim 1 and 2, characterized in that the blend contains, in addition to component A., 0.1 to 1.3 parts by weight — based on 100 parts by weight of the moulding material — of component B.

3. A process according to any of claims 1 to 3, characterized in that the blend of the components A. and B. is subjected to a thermal treatment at 190 °C to 240 °C in the melt.

**Revendications**

1. Procédé de préparation de masses à mouler à base de poly(étheresteramides) de poids moléculaire élevé, dont la viscosité relative en solution $\eta_{rel}$ est au minimum de 2,0, caractérisé par le fait que l'on prépare un mélange à partir

A. de poly(étheresteramides) dont la viscosité relative en solution $\eta_{rel}$ est de 1,5 au minimum, et

B. de 0,05 à 1,5 partie en poids — relativement à 100 parties en poids de la masse à mouler — d'un di-isocyanate d'isophorone cyclique trimérisé ou d'un oligomère de celui-ci possédant un degré d'oligomérisation de 2 à 5 avec une fonctionnalité isocyanate de 3 à 7, et que l'on fait subir à celui-ci un traitement thermique à l'état fondu, à une température de 180 à 250 °C.

2. Procédé selon la revendication 1, caractérisé par le fait que le mélange contient, en plus du composant A, de 0,1 à 1,3 partie en poids du composant B — relativement à 100 parties en poids de la masse à mouler.

3. Procédé selon les revendications 1 et 2, caractérisé par le fait que le mélange des composants A et B subit un traitement thermique à l'état fondu, à une température de 190 à 240 °C.